# EUROPEAN PATENT APPLICATION

(11) **EP 4 442 693 A1**
(43) Date of publication of application: **09.10.2024**
(21) Application number: 22898316.9
(22) Date of filing: 27.10.2022
(51) Int. Cl.: C07F 7/18, A01N 55/10, A01P 1/00, D06M 13/513

(54) **COMPOSITION CONTAINING ORGANOSILICON COMPOUND**

(30) Priority: 29.11.2021 JP 2021192978
(71) Applicant: SHIN-ETSU CHEMICAL CO., LTD., Tokyo 1000005 (JP)
(72) Inventor: HIROKAMI, Munenao, Annaka-shi, Gunma 379-0224 (JP)
(74) Representative: Mewburn Ellis LLP
(86) International application number: PCT/JP2022/040149
(87) International publication number: WO 2023/095532

(57) **Abstract**

This composition containing an organosilicon compound represented by formula (1) and an amino group-containing organosilicon compound can impart excellent washing durability and sustained antibacterial and antiviral performance to a synthetic fiber such as a polyester fiber. 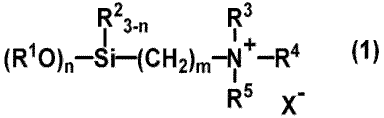 (In the formula, R¹ each independently represent a C1-C10 alkyl group or a C6-C10 aryl group, R² each independently represent a C1-C10 alkyl group or a C6-C10 aryl group, R³ represents a C12-C24 alkyl group, R⁴ and R⁵ each independently represent a C1-C10 alkyl group, X represents a halogen atom, m represents an integer of 1-20, and n represents an integer of 1-3.)

## Description

### TECHNICAL FIELD

This invention relates to a composition comprising organosilicon compounds and more particularly, to a composition comprising a quaternary ammonium salt-containing organosilicon compound and an amino-containing organosilicon compound.

### BACKGROUND ART

As the interest in antibacterial and antiviral properties is recently increasing, sustainable antiviral agents are demanded. For example, compositions based on octadecyldimethyl(3-trialkoxysilylpropyl)ammonium chloride are known as fixable antibacterial and antiviral agents (see Patent Documents 1 and 2).

These compositions exhibit enough wash fastness to impart sustainable antibacterial or antiviral properties when cotton-containing textiles are treated therewith, but a substantial loss of wash fastness when synthetic textiles such as polyester textiles are treated.

### PRIOR ART DOCUMENTS

### PATENT DOCUMENTS

Patent Document 1: JP-A 2011-098976
Patent Document 2: WO 2015/141516

### SUMMARY OF INVENTION

### TECHNICAL PROBLEM

An object of the invention, which has been made under the above-mentioned circumstances, is to provide a composition which can impart improved wash fastness and sustainable antibacterial or antiviral properties to synthetic textiles such as polyester textiles.

### SOLUTION TO PROBLEM

Making extensive investigations to attain the above object, the inventor has found that a composition comprising a specific quaternary ammonium salt-containing organosilicon compound and an amino-containing organosilicon compound can impart improved wash fastness and sustainable antibacterial or antiviral properties to synthetic textiles such as polyester textiles. The invention is predicated on this finding.

The invention is defined below.
1. A composition comprising an organosilicon compound having the formula (1) and an amino-containing organosilicon compound, 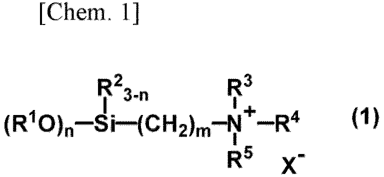 wherein R¹ is each independently hydrogen, a C₁-C₁₀ alkyl group or C₆-C₁₀ aryl group, R² is each independently a C₁-C₁₀ alkyl group or C₆-C₁₀ aryl group, R³ is a C₁₂-C₂₄ alkyl group, R⁴ and R⁵ are each independently a C₁-C₆ alkyl group, X is halogen, m is an integer of 1 to 20, and n is an integer of 1 to 3.
2. The composition of 1 wherein m is an integer of 4 to 11.
3. The composition of 1 or 2 wherein the organosilicon compound having formula (1) and the amino-containing organosilicon compound are present in a weight ratio of 99:1 to 10:90.
4. An article treated with the composition of any one of 1 to 3.

### ADVANTAGEOUS EFFECTS OF INVENTION

By treating an article of polyester textile with the inventive composition, sustainable antibacterial or antiviral properties can be imparted to the article.

### DESCRIPTION OF EMBODIMENTS

Now the invention is described in detail.

The invention provides a composition comprising an organosilicon compound having the formula (1), referred to as organosilicon compound (1), hereinafter, and an amino-containing organosilicon compound.

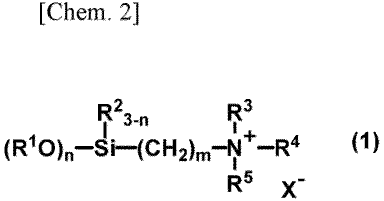

In formula (1), the alkyl group of 1 to 10 carbon atoms, preferably 1 to 8 carbon atoms, more preferably 1 to 6 carbon atoms, represented by R¹ may be straight, branched or cyclic, and examples thereof include methyl, ethyl, n-propyl, isopropyl, n-butyl, isobutyl, s-butyl, t-butyl, n-pentyl, n-hexyl and cyclohexyl.

Examples of the aryl group of 6 to 10 carbon atoms, preferably 6 to 8 carbon atoms, represented by R¹ include phenyl and tolyl.

Inter alia, R¹ is preferably hydrogen or a C₁-C₃ alkyl group, more preferably hydrogen, methyl or ethyl.

Examples of the C₁-C₁₀ alkyl group and C₆-C₁₀ aryl group represented by R² are as exemplified for R¹. Among others, methyl is preferred.

The alkyl group of 12 to 24 carbon atoms, preferably 12 to 20 carbon atoms, more preferably 12 to 18 carbon atoms, even more preferably 14 to 18 carbon atoms, represented by R³ may be straight, branched or cyclic, and examples thereof include n-dodecyl, 2-methylundecyl, n-tridecyl, n-tetradecyl, n-pentadecyl, n-hexadecyl, n-heptadecyl, n-octadecyl, n-nonadecyl, n-eicosyl, n-heneicosyl, n-docosyl, n-tricosyl, n-tetracosyl, and cyclododecyl. Inter alia, R³ is preferably n-octadecyl from the aspects of availability of reactants and environmental load during service.

The C₁-C₆ alkyl groups represented by R⁴ and R⁵ may be straight, branched or cyclic, and examples thereof include methyl, ethyl, n-propyl, isopropyl, n-butyl, isobutyl, s-butyl, t-butyl, n-pentyl, n-hexyl and cyclohexyl. Inter alia, R⁴ and R⁵ each are preferably a C₁-C₃ alkyl group, with methyl being more preferred from the aspects of availability of reactants and environmental load during service.

In formula (1), m is an integer of 1 to 20, preferably 4 to 11, most preferably 8. When an organosilicon compound wherein m is 4 or more is used, an aqueous solution thereof is more improved in storage stability.

Examples of the halogen X include chlorine and bromine.

Examples of the organosilicon compound which can be used in the inventive composition include octadecyldimethyl(3-trimethoxysilylpropyl)ammonium chloride,
octadecyldimethyl(3-triethoxysilylpropyl)ammonium chloride,
octadecyldimethyl(4-trimethoxysilylbutyl)ammonium chloride,
octadecyldimethyl(4-triethoxysilylbutyl)ammonium chloride,
octadecyldimethyl(6-trimethoxysilylhexyl)ammonium chloride,
octadecyldimethyl(6-triethoxysilylhexyl)ammonium chloride,
octadecyldimethyl(8-trimethoxysilyloctyl)ammonium chloride,
octadecyldimethyl(8-triethoxysilyloctyl)ammonium chloride,
octadecyldimethyl(8-dimethoxymethylsilyloctyl)ammonium chloride,
octadecyldimethyl(8-diethoxymethylsilyloctyl)ammonium chloride,
octadecyldimethyl(10-trimethoxysilyldecyl)ammonium chloride,
octadecyldimethyl(10-triethoxysilyldecyl)ammonium chloride,
octadecyldimethyl(11-trimethoxysilylundecyl)ammonium chloride,
octadecyldimethyl(11-triethoxysilylundecyl)ammonium chloride,
octadecyldimethyl(12-trimethoxysilyldodecyl)ammonium chloride,
octadecyldimethyl(12-triethoxysilyldodecyl)ammonium chloride,
dodecyldimethyl(8-triethoxysilyloctyl)ammonium chloride,
dodecyldimethyl(8-dimethoxysilyloctyl)ammonium chloride,
tetradecyldimethyl(8-triethoxysilyloctyl)ammonium chloride,
tetradecyldimethyl(8-dimethoxymethylsilyloctyl)ammonium chloride,
octadecyldiethyl(8-triethoxysilyloctyl)ammonium chloride, and
octadecyldiethyl(8-dimethoxymethylsilyloctyl)ammonium chloride, which may be used alone or in admixture of two or more.

Preferred among others are
octadecyldimethyl(4-trimethoxysilylbutyl)ammonium chloride,
octadecyldimethyl(6-triethoxysilylhexyl)ammonium chloride,
octadecyldimethyl(8-trimethoxysilyloctyl)ammonium chloride,
octadecyldimethyl(8-triethoxysilyloctyl)ammonium chloride,
octadecyldimethyl(8-dimethoxymethylsilyloctyl)ammonium chloride,
octadecyldimethyl(8-diethoxymethylsilyloctyl)ammonium chloride, and
octadecyldimethyl(11-trimethoxysilylundecyl)ammonium chloride. More preferred are
octadecyldimethyl(8-trimethoxysilyloctyl)ammonium chloride,
octadecyldimethyl(8-triethoxysilyloctyl)ammonium chloride,
octadecyldimethyl(8-dimethoxymethylsilyloctyl)ammonium chloride, and
octadecyldimethyl(8-diethoxymethylsilyloctyl)ammonium chloride.

The organosilicon compound (1) can be obtained by reacting an organosilicon compound having the formula (A), to be referred to as organosilicon compound (A), hereinafter, with a tertiary amine having the formula (B), to be referred to as tertiary amine (B), hereinafter, in an air atmosphere or an inert gas atmosphere such as nitrogen.

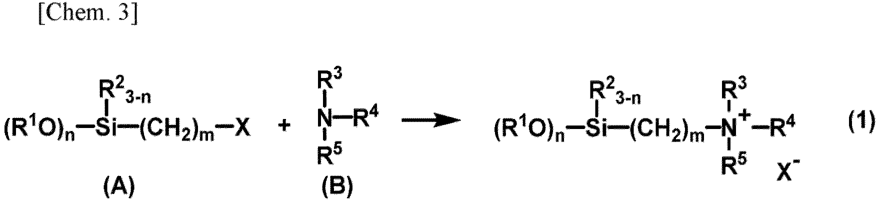

Herein R¹, R², R³, R⁴, R⁵, X, m and n are as defined above.

Examples of the organosilicon compound (A) include
3-chloropropyltrimethoxysilane, 3-chloropropyltriethoxysilane,
4-bromobutyltrimethoxysilane, 4-bromobutyltriethoxysilane, 4-chlorobutyltrimethoxysilane,
4-chlorobutyltriethoxysilane, 4-bromobutyltrimethoxysilane, 4-bromobutyltriethoxysilane,
6-chlorohexyltrimethoxysilane, 6-chlorohexyltriethoxysilane,
6-bromohexyltrimethoxysilane, 6-bromohexyltriethoxysilane, 8-chlorooctyltrimethoxysilane,
8-chlorooctyltriethoxysilane, 8-chlorooctyldimethoxymethylsilane,
8-chlorooctyldiethoxymethylsilane, 8-bromooctyltrimethoxysilane,
8-bromooctyltriethoxysilane, 8-bromooctyldimethoxymethylsilane,
8-bromooctyldiethoxymethylsilane, 10-chlorodecyltrimethoxysilane,
10-chlorodecyltriethoxysilane, 10-bromodecyltrimethoxysilane,
10-bromodecyltriethoxysilane, 11-chloroundecyltrimethoxysilane,
11-chloroundecyltriethoxysilane, 11-bromoundecyltrimethoxysilane,
11-bromoundecyltriethoxysilane, 12-chlorododecyltrimethoxysilane,
12-chlorododecyltriethoxysilane, 12-bromododecyltrimethoxysilane, and
12-bromododecyltriethoxysilane, which may be used alone or in admixture of two or more.

Preferred among these are 4-chlorobutyltrimethoxysilane,
4-chlorobutyltriethoxysilane, 6-chlorohexyltrimethoxysilane, 6-chlorohexyltriethoxysilane,
8-chlorooctyltrimethoxysilane, 8-chlorooctyltriethoxysilane,
8-chlorooctyldimethoxymethylsilane, 8-chlorooctyldiethoxymethylsilane,
11-chloroundecyltrimethoxysilane, and 11-chloroundecyltriethoxysilane. More preferred are 8-chlorooctyltrimethoxysilane, 8-chlorooctyltriethoxysilane,
8-chlorooctyldimethoxymethylsilane, and 8-chlorooctyldiethoxymethylsilane.

Examples of the tertiary amine (B) include dodecyldimethylamine, dodecyldiethylamine, tridecyldimethylamine, tridecyldiethylamine, tetradecyldimethylamine, tetradecyldiethylamine, pentadecyldimethylamine, pentadecyldiethylamine, hexadecyldimethylamine, hexadecyldiethylamine, heptadecyldimethylamine, heptadecyldiethylamine, octadecyldimethylamine, octadecyldiethylamine, nonadecyldimethylamine, nonadecyldiethylamine, eicosyldimethylamine, eicosyldiethylamine, heneicosyldimethylamine, heneicosyldiethylamine, docosyldimethylamine, docosyldiethylamine, tricosyldimethylamine, tricosyldiethylamine, tetaracosyldimethylamine, and tetracosyldiethylamine, which may be used alone or in admixture of two or more.

Of these, octadecyldimethylamine and octadecyldiethylamine are preferred, with octadecyldimethylamine being most preferred.

The reaction may be performed in a solvent-less system. If necessary, the reaction may be performed in an alcohol solvent such as methanol or ethanol as long as it does not retard the reaction.

Although the reaction temperature is not particularly limited, the temperature is preferably 80 to 150°C, more preferably 100 to 130°C.

The reaction time is preferably 1 to 100 hours, more preferably 5 to 50 hours.

In the reaction, organosilicon compound (A) and tertiary amine (B) are used in such a ratio that 0.7 to 1.3 moles of organosilicon compound (A) is available per mole of tertiary amine (B).

In one embodiment of the composition, water may be added to the organosilicon compound (1) in an air atmosphere or an inert gas atmosphere such as nitrogen, to hydrolyze some or all of alkoxysilyl or aryloxy silyl groups in organosilicon compound (1) into silanol (Si-OH) groups. Water may be added continuously during the hydrolytic reaction or prior to the start of hydrolytic reaction. The alcohol solution of organosilicon compound (1) obtained by performing the reaction in an alcohol solvent may be directly used in the hydrolytic reaction.

The temperature of hydrolytic reaction is preferably 50 to 110°C, more preferably 60 to 105°C.

The reaction time is preferably 1 to 30 hours, more preferably 5 to 25 hours.

The alcohol component ROH (wherein R has the same meaning as the group of R¹ exclusive of hydrogen) by-produced in the hydrolytic reaction and the alcohol component which is optionally added along with water during the hydrolytic reaction are preferably removed by suitable separation means such as distillation. It is noted that distillation is preferably performed at the same time as the hydrolytic reaction.

The amino-containing organosilicon compound is a compound having at least one amino group selected from primary, secondary and tertiary amino groups, and an alkoxysilyl group. Examples include 3-aminopropyltrimethoxysilane,
3-aminopropylmethyldimethoxysilane, 3-aminopropyltriethoxysilane,
3-aminopropylmethyldiethoxysilane, 8-aminooctyltrimethoxysilane,
8-aminooctyldimethoxysilane, 8-aminooctyltriethoxysilane,
8-aminooctylmethyldiethoxysilane, N-(β-aminoethyl)-γ-aminopropyltrimethoxysilane,
N-(β-aminoethyl)-γ-aminopropylmethyldimethoxysilane,
N-(β-aminoethyl)-γ-aminopropyltriethoxysilane,
N-(β-aminoethyl)-γ-aminopropylmethyldiethoxysilane,
N-(β-aminoethyl)-γ-aminooctyltrimethoxysilane,
N-(β-aminoethyl)-γ-aminooctylmethyldimethoxysilane,
N-(β-aminoethyl)-γ-aminooctyltriethoxysilane,
N-(β-aminoethyl)-γ-aminopropylmethyldiethoxysilane,
N-phenyl-3-aminopropyltrimethoxysilane, and
N-phenyl-3-aminopropylmethyldimethoxysilane.

In the composition, the organosilicon compound (1) and the amino-containing organosilicon compound are preferably present in a weight ratio of 99:1 to 10:90, more preferably 95:5 to 20:80. When the content of the quaternary ammonium salt-containing organosilicon compound exceeds 10% by weight, antibacterial or antiviral properties can be imparted. When the content of the amino-containing organosilicon compound exceeds 1% by weight, the wash fastness of antibacterial or antiviral properties is improved.

The inventive composition may contain a condensate obtained from intermolecular condensation of silanol groups resulting from hydrolysis of the organosilicon compound (1) and the amino-containing organosilicon compound.

Besides the organosilicon compound (1) and the amino-containing organosilicon compound, the inventive composition may contain additives such as organic solvents, organic acids, and surfactants.

The inventive composition may be diluted with water or an organic solvent prior to use. Although the total amount of the organosilicon compound (1) and the amino-containing organosilicon compound is not particularly limited, it is preferred from the aspects of performance and productivity that the total amount is 0.01 to 50% by weight, more preferably 0.1 to 20% by weight, even more preferably more than 0.2% to 10% by weight.

The inventive composition is applicable to various materials and articles to impart antibacterial or antiviral properties thereto.

Examples of the materials and articles include natural fibers such as cotton, silk and wool, regenerated fibers such as rayon, semi-synthetic fibers such as acetate, synthetic fibers such as vinylon, polyester, nylon, polyethylene, polypropylene, polyurethane, and polyaramide fibers; various textiles such as complex textiles of the foregoing fibers (e.g., polyester/cotton); various metal materials such as iron, stainless steel, aluminum, nickel, zinc and copper; various synthetic resin materials such as acrylic resins, phenolic resins, epoxy resins, polycarbonate resins, and polybutylene terephthalate resins; various inorganic materials such as glass, titanium, ceramics, cement and mortar; and various articles using the foregoing materials.

Although the method of applying the composition to various materials is not particularly limited, the optimum method may be chosen depending on the shape of a particular material or the like. For example, immersion treatment, spray treatment, flow coating, roll coating, and bar coating methods are suitable.

After the composition is contacted with various materials, the drying step is preferably carried out. Suitable drying methods include heat drying methods using hot air, heater, infrared radiation and near-infrared radiation, and drying methods using vacuum distillation, but are not limited thereto. The drying temperature, which is not particularly limited, may be adjusted as appropriate depending on the heat resistance of the material and is preferably in the range of 40 to 250°C, more preferably 50 to 150°C. The drying time, which is not particularly limited, may be adjusted as appropriate depending on the type of the material selected and the amount of the composition applied.

### EXAMPLES

Synthesis Examples, Examples, and Comparative Examples are given below for further illustrating the invention although the invention is not limited thereto.

### [1] Synthesis of quaternary ammonium salt-containing organosilicon compound

### [Synthesis Example 1-1]

A nitrogen-purged 300-mL pressure reactor was charged with 39.7 g of 3-chloropropyltrimethoxysilane, 59.6 g of octadecyldimethylamine, and 99.3 g of methanol, which were heated for reaction at 120°C for 20 hours. The reaction was followed by filtration, obtaining 190 g of the methanol solution of octadecyldimethyl(3-trimethoxysilylpropyl)ammonium chloride (solids concentration 50 wt%).

### [Synthesis Example 1-2]

A nitrogen-purged 300-mL pressure reactor was charged with 48.1 g of 3-chloropropyltriethoxysilane, 59.6 g of octadecyldimethylamine, and 107.7 g of ethanol, which were heated for reaction at 120°C for 20 hours. The reaction was followed by filtration, obtaining 215 g of the ethanol solution of octadecyldimethyl(3-triethoxysilylpropyl)ammonium chloride (solids concentration 50 wt%).

### [Synthesis Example 1-3]

A nitrogen-purged 300-mL pressure reactor was charged with 42.4 g of 4-chlorobutyltrimethoxysilane, 59.6 g of octadecyldimethylamine (Lipomin DM18D by Lion Corp.), and 102 g of methanol, which were heated for reaction at 120°C for 20 hours. The reaction was followed by filtration, obtaining 200 g of the methanol solution of octadecyldimethyl(4-trimethoxysilylbutyl)ammonium chloride (solids concentration 50 wt%).

### [Synthesis Example 1-4]

A nitrogen-purged 300-mL pressure reactor was charged with 48.0 g of 6-chlorohexyltrimethoxysilane, 59.6 g of octadecyldimethylamine, and 108 g of methanol, which were heated for reaction at 120°C for 20 hours. The reaction was followed by filtration, obtaining 206 g of the methanol solution of octadecyldimethyl(6-trimethoxysilylhexyl)ammonium chloride (solids concentration 50 wt%).

### [Synthesis Example 1-5]

A nitrogen-purged 300-mL pressure reactor was charged with 53.8 g of 8-chlorooctyltrimethoxysilane, 59.6 g of octadecyldimethylamine, and 113 g of methanol, which were heated for reaction at 120°C for 20 hours. The reaction was followed by filtration, obtaining 220 g of the methanol solution of octadecyldimethyl(8-trimethoxysilyloctyl)ammonium chloride (solids concentration 50 wt%).

### [Synthesis Example 1-6]

A nitrogen-purged 300-mL pressure reactor was charged with 62.2 g of 8-chlorooctyltriethoxysilane, 59.6 g of octadecyldimethylamine, and 122 g of ethanol, which were heated for reaction at 120°C for 20 hours. The reaction was followed by filtration, obtaining 235 g of the ethanol solution of octadecyldimethyl(8-triethoxysilyloctyl)ammonium chloride (solids concentration 50 wt%).

### [Synthesis Example 1-7]

A nitrogen-purged 300-mL pressure reactor was charged with 62.2 g of 11-chloroundecyltrimethoxysilane, 59.6 g of octadecyldimethylamine, and 122 g of methanol, which were heated for reaction at 120°C for 20 hours. The reaction was followed by filtration, obtaining 235 g of the methanol solution of octadecyldimethyl(11-trimethoxysilylundecyl)ammonium chloride (solids concentration 50 wt%).

### [2] Preparation of composition

### [Examples 1-1 to 1-10]

In a nitrogen-purged 500-mL reactor, compositions A to J were obtained by mixing the quaternary ammonium salt-containing organosilicon compounds obtained in Synthesis Examples 1-1 to 1-7 with an amino-containing organosilicon compound in the blending ratio shown in Table 1.
Aminosilane 1: 3-aminopropyltriethoxysilane (KBE-903 by Shin-Etsu Chemical Co., Ltd.)
Aminosilane 2: N-2-(aminoethyl)-3-aminopropyltrimethoxysilane (KBM-603 by Shin-Etsu Chemical Co., Ltd.)

**[Table 1]**

| Example | | 1-1 | 1-2 | 1-3 | 1-4 | 1-5 | 1-6 | 1-7 | 1-8 | 1-9 | 1-10 |
|---|---|---|---|---|---|---|---|---|---|---|---|
| Composition | | A | B | C | D | E | F | G | H | I | J |
| Quaternary ammonium salt-containing organosilicon compound | Synthesis Example 1-1 | 100 | | | | | | | | | |
| | Synthesis Example 1-2 | | 100 | | | | | | | | |
| | Synthesis Example 1-3 | | | 100 | | | | | | | |
| | Synthesis Example 1-4 | | | | 100 | | | | | | |
| | Synthesis Example 1-5 | | | | | 100 | | | | | |
| | Synthesis Example 1-6 | | | | | | 100 | | 100 | 100 | 100 |
| | Synthesis Example 1-7 | | | | | | | 100 | | | |
| Amino-containing organosilicon compound | Aminosilane 1 | 50 | 50 | 50 | 50 | 50 | 50 | 50 | 10 | 5 | |
| | Aminosilane 2 | | | | | | | | | | 50 |

### [Examples 2-1 to 2-10 and Comparative Examples 2-1 to 2-3]

The compositions obtained in Examples 1-1 to 1-10 and the solutions of quaternary ammonium salt-containing organosilicon compounds obtained in Synthesis Examples 1-1, 1-2, and 1-6 were further diluted with deionized water to a concentration of 0.5% by weight. The solutions were evaluated for outer appearance after 1 hour, 1 day, 7 days and 28 days from the dilution, with the results shown in Table 2. The evaluation criterion is as follows.
○: transparent solution without precipitates
×: turbid solution or transparent solution with precipitates

**[Table 2]**

| | Composition | Aqueous solution's appearance after | | | |
|---|---|---|---|---|---|
| | | 1 hour | 1 day | 7 days | 28 days |
| Example 2-1 | A | ○ | ○ | × | × |
| Example 2-2 | B | ○ | ○ | × | × |
| Example 2-3 | C | ○ | ○ | ○ | × |
| Example 2-4 | D | ○ | ○ | ○ | ○ |
| Example 2-5 | E | ○ | ○ | ○ | ○ |
| Example 2-6 | F | ○ | ○ | ○ | ○ |
| Example 2-7 | G | ○ | ○ | ○ | ○ |
| Example 2-8 | H | ○ | ○ | ○ | ○ |
| Example 2-9 | I | ○ | ○ | ○ | ○ |
| Example 2-10 | J | ○ | ○ | ○ | ○ |
| Comparative Example 2-1 | Synthesis Examples 1-1 | ○ | ○ | ○ | ○ |
| Comparative Example 2-2 | Synthesis Examples 1-2 | ○ | ○ | ○ | ○ |
| Comparative Example 2-3 | Synthesis Examples 1-6 | ○ | ○ | ○ | ○ |

### [3] Preparation of treated article

### [Examples 3-1 to 3-10 and Comparative Examples 2-1 to 2-3]

Treated polyester textiles were obtained by immersing 5 g of polyester textile in each of the dilute treating solutions which were prepared in Examples 2-1 to 2-10 and Comparative Examples 2-1 to 2-3 for 30 seconds, taking out the textile, and drying at 120°C for 10 minutes. Table 3 tabulates the relationship of the treating solutions used to the polyester textiles treated therewith.

**[Table 3]**

| Treating solution | Treated polyester textile |
|---|---|
| Example 2-1 | Example 3-1 |
| Example 2-2 | Example 3-2 |
| Example 2-3 | Example 3-3 |
| Example 2-4 | Example 3-4 |
| Example 2-5 | Example 3-5 |
| Example 2-6 | Example 3-6 |
| Example 2-7 | Example 3-7 |
| Example 2-8 | Example 3-8 |
| Example 2-9 | Example 3-9 |
| Example 2-10 | Example 3-10 |
| Comparative Example 2-1 | Comparative Example 3-1 |
| Comparative Example 2-2 | Comparative Example 3-2 |
| Comparative Example 2-3 | Comparative Example 3-3 |

### [4] Evaluation of antibacterial activity

The textile obtained was evaluated for antibacterial activity with reference to JIS L1902. Evaluation was made in terms of an antibacterial activity value computed by the following method.
[Textile] : The textiles as treated in Examples 3-1 to 3-10 and Comparative Examples 3-1 to 3-3 and the textiles after 10 cycles of washing in a household washer (model NA-VX86002, Panasonic Corp., standard course, detergent: JAFET standard detergent)
[Bacterium used] : Staphylococcus aureus
[Determination of viable bacterial cells] : A starter solution, 0.2 mL, was added to the textile in a sterilized vial. In the closed vial, the textile was held static at 37°C for 24 hours as a sensitizing time. After the lapse of sensitizing time, 20 mL of wash-out physiological saline was added to the vial. After thorough mixing, the cells were washed out. The count of viable cells in the washed-out fluid was computed by the pour culture method.
[Antibacterial activity value] : (logCₜ - logC₀) - (logTₜ - logT₀)
   - logCt:: common logarithm of a viable cell count in untreated textile after cultivation
   - logC₀:: common logarithm of a viable cell count in untreated textile immediately after inoculation
   - logTt:: common logarithm of a viable cell count in treated textile after cultivation
   - logT₀:: common logarithm of a viable cell count in treated textile after cultivation

**[Table 4]**

| | Antibacterial activity value | |
|---|---|---|
| | no washing | 10 cycles of washing |
| Example 3-1 | ≥ 4.0 | 1.5 |
| Example 3-2 | ≥ 4.0 | 1.5 |
| Example 3-3 | ≥ 4.0 | 2.1 |
| Example 3-4 | ≥ 4.0 | 2.2 |
| Example 3-5 | ≥ 4.0 | 3.0 |
| Example 3-6 | ≥ 4.0 | 3.0 |
| Example 3-7 | ≥ 4.0 | 3.0 |
| Example 3-8 | ≥ 4.0 | 3.0 |
| Example 3-9 | ≥ 4.0 | 3.0 |
| Example 3-10 | ≥ 4.0 | 3.0 |
| Comparative Example 3-1 | ≥ 4.0 | ≤ 0.5 |
| Comparative Example 3-2 | ≥ 4.0 | ≤ 0.5 |
| Comparative Example 3-3 | ≥ 4.0 | ≤ 0.5 |

### [5] Evaluation of antiviral activity

The textile obtained was evaluated for antiviral activity with reference to JIS L1922. Evaluation was made in terms of an antiviral activity value computed by the following method. The results are shown in Table 5.
[Textile] : The textiles treated in Examples 3-1 to 3-10 and Comparative Examples 3-1 to 3-3 and the textiles after 10 cycles of washing in a household washer (model NA-VX86002, Panasonic Corp., standard course, detergent: JAFET standard detergent)
[Virus used] : influenza virus H1N1 IOWA
[Preparation of viral fluid]: The influenza virus was inoculated into MDCK cells. After adsorption at 37°C for 1 hour, the inoculated virus fluid was removed, followed by 2 times of washing with sterilized PBS. MEM culture medium was added, followed by cultivation in the presence of 5% CO₂ at 37°C for 5 days. The culture supernatant was recovered and centrifuged at 3,000 rpm for 30 minutes. The centrifugal supernatant was dispensed and stored below -70°C as viral fluid.
[Determination of viral infection value] : The viral fluid, 0.4 mL, was added to the textile in a sterilized vial. In the closed vial, the textile was held static at room temperature (25°C) for 2 hours as a sensitizing time. After the lapse of sensitizing time, 20 mL of cell-maintaining culture medium was added to the vial. After thorough mixing, the virus was washed out. The washed-out fluid was further subjected to ten-fold serial dilutions with cell maintenance culture medium. Each dilution was inoculated into culture cells on a microplate and cultivated at 37°C for 5 days. Each culture fluid after cultivation was recovered. It was confirmed by haemagglutination reaction whether or not the virus propagated. A viral infection value was measured.
[Antiviral activity value] : logVₐ - logV_{c}
   - logVₐ:: common logarithm of a viral infection value immediately after inoculation
   - logV_{c}:: common logarithm of a viral infection value after cultivation

**[Table 5]**

| | Antiviral activity value | |
|---|---|---|
| | no washing | 10 cycles of washing |
| Example 3-1 | ≥ 3.0 | 1.5 |
| Example 3-2 | ≥ 3.0 | 1.5 |
| Example 3-3 | ≥ 3.0 | 1.8 |
| Example 3-4 | ≥ 3.0 | 1.8 |
| Example 3-5 | ≥ 3.0 | 2.2 |
| Example 3-6 | ≥ 3.0 | 2.4 |
| Example 3-7 | ≥ 3.0 | 2.5 |
| Example 3-8 | ≥ 3.0 | 2.5 |
| Example 3-9 | ≥ 3.0 | 2.5 |
| Example 3-10 | ≥ 3.0 | 2.5 |
| Comparative Example 3-1 | ≥ 3.0 | ≤ 0.2 |
| Comparative Example 3-2 | ≥ 3.0 | ≤ 0.2 |
| Comparative Example 3-3 | ≥ 3.0 | ≤ 0.2 |

As seen from Tables 4 and 5, the polyester textiles treated with the compositions within the scope of the invention (Examples 3-1 to 3-10) showed fully-sustainable excellent antibacterial and antiviral properties. When the compositions of Examples 2-3 and 2-4 were used (Examples 3-3 and 3-4), the properties were more durable. When the compositions of Examples 2-5 to 2-10 were used (Examples 3-5 to 3-10), the properties were outstandingly durable.

In contrast, Comparative Examples 3-1 to 3-3 lost antibacterial and antiviral properties as washing was repeated, indicating poor durability.

## Claims

1. A composition comprising an organosilicon compound having the formula (1) and an amino-containing organosilicon compound, 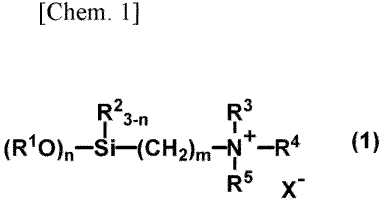 wherein R¹ is each independently hydrogen, a C₁-C₁₀ alkyl group or C₆-C₁₀ aryl group, R² is each independently a C₁-C₁₀ alkyl group or C₆-C₁₀ aryl group, R³ is a C₁₂-C₂₄ alkyl group, R⁴ and R⁵ are each independently a C₁-C₆ alkyl group, X is halogen, m is an integer of 1 to 20, and n is an integer of 1 to 3.

2. The composition of claim 1 wherein m is an integer of 4 to 11.

3. The composition of claim 1 or 2 wherein the organosilicon compound having formula (1) and the amino-containing organosilicon compound are present in a weight ratio of 99:1 to 10:90.

4. An article treated with the composition of any one of claims 1 to 3.
